(19) Europäisches Patentamt
European Patent Office
Office européen des brevets

(11) **EP 2 620 723 B1**

(12) **EUROPEAN PATENT SPECIFICATION**

(45) Date of publication and mention
of the grant of the patent:
**23.12.2020 Bulletin 2020/52**

(51) Int Cl.:
*F25B 1/02* *(2006.01)*          *F25B 5/02* *(2006.01)*
*F25B 49/02* *(2006.01)*         *F04D 27/00* *(2006.01)*
*F25B 1/10* *(2006.01)*

(21) Application number: **13153066.9**

(22) Date of filing: **29.01.2013**

(54) **Apparatus and method for controlling compressor, and refrigerator having the same**

Vorrichtung und Verfahren zum Steuern eines Kompressors und Kühlschrank damit

Appareil et procédé de commande de compresseur et réfrigérateur le comportant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.01.2012 KR 20120009083**

(43) Date of publication of application:
**31.07.2013 Bulletin 2013/31**

(73) Proprietor: **LG Electronics Inc.
Seoul 07336 (KR)**

(72) Inventors:
• **Yoo, Jaeyoo**
**Seoul (KR)**

• **Kim, Gyunam**
**Seoul (KR)**
• **Lee, Boram**
**Seoul (KR)**

(74) Representative: **Ter Meer Steinmeister & Partner
Patentanwälte mbB
Nymphenburger Straße 4
80335 München (DE)**

(56) References cited:
WO-A1-2008/033088      JP-A- 2000 130 824
US-A1- 2003 177 773     US-A1- 2007 283 707
US-A1- 2008 150 456     US-A1- 2009 096 403

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 620 723 B1

## Description

BACKGROUND OF THE INVENTION

### 1. Field of the invention

The present disclosure relates to a compressor control apparatus for controlling the operation of two compressors using one inverter and a refrigerator comprising the same.

### 2. Description of the related art

In general, compressor is an apparatus for converting mechanical energy into compression energy of a compression fluid and used as part of a freezing device, such as a refrigerator, an air conditioner or the like.

Compressors may be divided into a reciprocating compressor, a rotary compressor, and a scroll compressor. The reciprocating compressor forms a compression space between a piston and a cylinder to inhale or discharge a working gas, thereby compressing refrigerant while moving in a linear reciprocating manner. The rotary compressor forms a compressor space between an eccentrically rotated roller and a cylinder to inhale or discharge a working gas, thereby compressing refrigerant while the roller is eccentrically rotated along an inner wall of the cylinder. The scroll compressor forms a compression space between an orbiting scroll and a fixed scroll to inhale or discharge a working gas, thereby compressing refrigerant while the orbiting scroll is rotated along the fixed scroll.

The reciprocating compressor allows an inner piston to move in a linear reciprocating manner within the cylinder, thereby inhaling, compressing and discharging a refrigerant gas. The reciprocating compressor is largely divided into a recipro type and a linear type depending on how the piston is driven.

The recipro type reciprocating compressor is a scheme in which a crank shaft is coupled to a rotating motor and a piston is coupled to the crank shaft, thereby converting a rotational movement into a linear reciprocating movement. On the contrary, the linear type reciprocating compressor is a scheme in which a piston is connected to a linearly moving mover of the motor, thereby converting a linear movement of the motor into a reciprocating movement of the piston.

The reciprocating compressor may include an electric power unit for generating a driving force, and a compression unit for receiving the driving force from the electric power unit to compress a fluid. A motor is typically used for the electric power unit, and a linear motor is used in case of the linear type.

For the linear motor, the motor itself directly generates a linear driving force, and thus a mechanical conversion device is not required, and the structure thereof is not complicated. Furthermore, the linear motor may reduce loss due to energy conversion, and there is no connecting portion causing friction and abrasion, thereby greatly reducing noise. Furthermore, when a linear type reciprocating compressor (hereinafter, referred to as a "linear compressor") is used for a refrigerator or air conditioner, a stroke voltage applied to the linear compressor may be changed to change the compression ratio, thereby providing an advantage that the linear compressor can be used for variable freezing capacity control.

On the other hand, since a reciprocating compressor, particularly, linear compressor, performs a reciprocating movement in a state that the piston is not mechanically restricted in the cylinder, the piston may collide with the cylinder wall or the piston cannot move forward due to a large load when voltage is suddenly and excessively applied, thereby causing difficulty in properly performing the compression. Accordingly, a control apparatus for controlling the movement of the piston for the variation of a load or voltage is essentially required.

In general, a compressor control apparatus detects voltage and current applied to the compressor motor and estimates a stroke with a sensorless method to perform feedback control. At this time, the compressor control apparatus may include a triac or inverter as a means for controlling the compressor.

US 2007/0283707 A1 relates to an air conditioner having two compressors, wherein when one compressor is started, the phase advance capacitor for the other compressor is temporarily separated and used in parallel with the phase capacitor for the one compressor. Thus, an increased starting torque for the compressors can be achieved without using a starting capacitor. The first and second compressors are respectively connected to a power relay, which connects or disconnects an AC power supply.

JP 2000 130824 A relates to a controller for an air conditioner, wherein a switch is arranged between an inverter and a commercial power supply. When a compressor is started, a switch is turned on at first to connect the output of an inverter circuit with the compressor to start the compressor at low speed inverter output having a frequency substantially equal to zero. Upon receiving a notice that the output phase of the commercial power supply matches the inverter output phase, another switch is turned on and subsequently the first switch is turned off to interrupt the inverter output, so that the compressor is driven at a constant speed only with the output from the commercial power supply.

SUMMARY OF THE INVENTION

According to the embodiments of the present invention, an object is to provide a compressor control apparatus and method capable of operating two compressors using an alternating current (AC) switch, and a refrigerator including the same.

According to the embodiments of the present invention, another object is to provide a compressor control apparatus and method for detecting current and voltage applied to two compressor motors, respectively, and estimating a stroke of each compressor to control the stroke or frequency of the two compressors, in a separate or simultaneous manner, and a refrigerator including the same.

The objects are solved by the features of the independent claims.

A compressor control apparatus according to the invention includes a first and a second alternating current (AC) switch switched based on a first and a second control signal to drive a first and a second compressor, and a control unit configured to generate the first and the second control signal based on a load of the first and the second compressor to output them to the first and the second alternating current switch. Here, the first and the second compressor are operated in a simultaneous manner, or the first compressor or the second compressor is operated in a separate manner.

In the compressor control apparatus, the control unit may vary a firing angle of the first alternating current switch or second alternating current switch based on a freezing capacity of the first compressor or second compressor.

The compressor control apparatus may further include an input voltage detection unit configured to detect the power voltage of commercial alternating current (AC) power. Furthermore, compressor control apparatus may further include a direct current (DC) power supply unit configured to convert the commercial alternating current power into direct current power to apply it to the first and the second alternating current switch.

A compressor control method for controlling a first compressor and a second compressor using a first and a second alternating current (AC) switch, respectively, according to the invention includes receiving a compressor operation mode, and driving the first and the second alternating current switch in a simultaneous manner or driving the first alternating current switch or the second alternating current switch in a separate manner based on the compressor operation mode.

A refrigerator according to an embodiment may include a refrigerator body, a first and a second compressor provided in the refrigerator body to compress refrigerant, respectively, a first and a second alternating current switch switched based on a first and a second control signal to drive the first and the second compressor, and a control unit configured to generate the first and the second control signal based on a load of the first and the second compressor and output them to the first and the second alternating current switch, wherein the first and the second compressor are operated in a simultaneous manner or the first compressor or the second compressor is operated in a separate manner.

According to the present invention, the operation of two compressors is controlled using an alternating current (AC) switch, thereby minimizing the use of elements as well as increasing the compressor capacity and enhancing the operation efficiency of a system.

According to the embodiments of the present invention, a plurality of operation modes may be used to correspond to a load or freezing capacity using two compressors. Furthermore, according to the present invention, two compressors are operated in a separate or simultaneous manner using two alternating current (AC) switches, thereby simplifying the configuration of a system to reduce the cost.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIGS. 1 and 2 are views schematically illustrating a compressor control apparatus according to the embodiments of the present invention;
FIGS. 3A and 3B are graphs for explaining the operation of controlling the working of two compressors;
FIG. 4 is a flow chart schematically illustrating a compressor control method according to an embodiment;
FIG. 5 is a perspective view illustrating a refrigerator to which two compressors are applied; and
FIG. 6 is a cross-sectional view illustrating a reciprocating compressor having a compressor control apparatus according to the embodiments of the present invention.

## DETAILED DESCRIPTION OF THE INVENTION

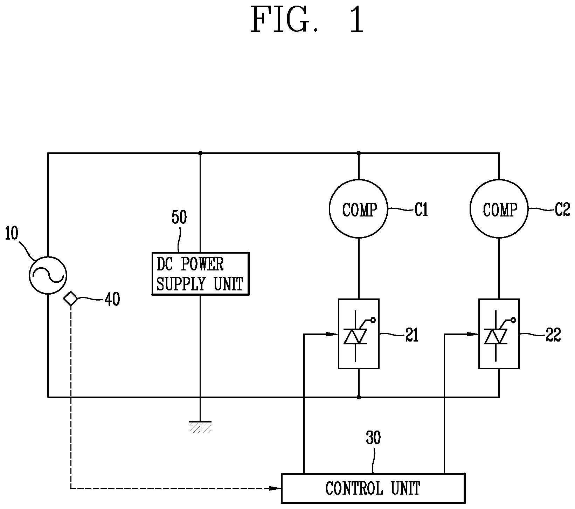

Referring to FIG. 1, a compressor control apparatus according to an embodiment may include a first and a second alternating current (AC) switch 21, 22 switched based on a first and a second control signal to drive a first and a second compressor (C1, C2), and a control unit 30 configured to generate a first and a second control signal based on a load of the first and the second compressor (C1, C2) to output them to the first and the second alternating current switch 21, 22. Here, the compressor control apparatus may operate the first and the second compressor in a simultaneous manner or operate the first compressor or the second compressor in a separate manner.

The first and the second alternating current (AC) switch are opened or closed to apply the motor drive voltage and motor drive current to compressor motors provided in the first and the second compressor. The alternating current (AC) switch may include a thyrister, a triac, or the like, but the triac is mostly used for the alternating current (AC) switch. The control unit 30 varies a firing angle of the first alternating current switch 21 or second alternating current switch 22 based on the freezing capacity of the first compressor (C1) and second compressor (C2).

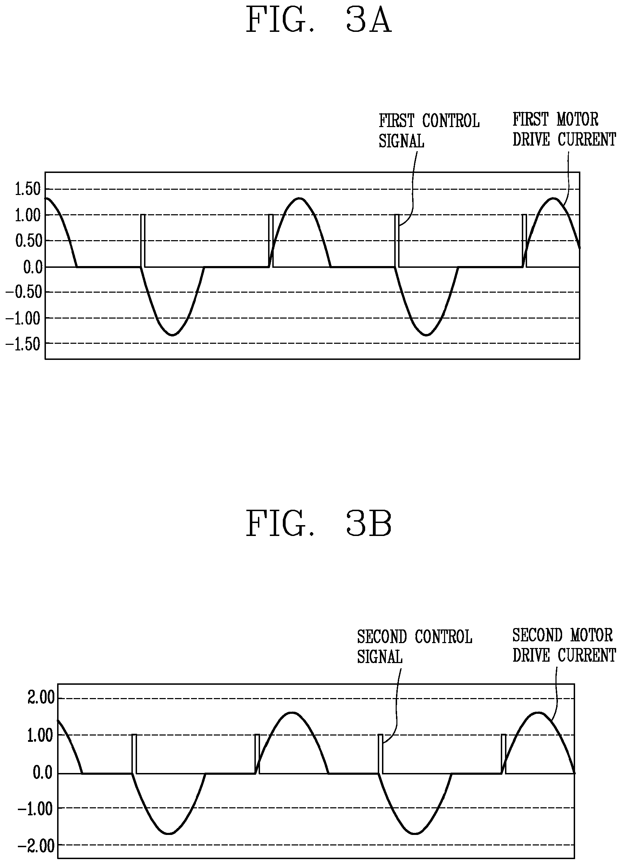

FIGS. 3A and 3B illustrate a method of varying a firing angle of the triac to control a size of freezing capacity of the compressor when the triac is used for the alternating current switch. Referring to FIG. 3A, when a gate voltage is received at the first alternating current switch 21 based on a first control signal, the first alternating current switch 21 supplies a first motor drive current to the first compressor (C1). Similarly, referring to FIG. 3B, when a gate voltage is received at the second alternating current switch 22 based on a second control signal, the second alternating current switch 22 supplies a second motor drive current to the second compressor (C2). At this time, the control unit 30 may generate a first and a second signal for varying a firing angle of the first and the second alternating current switch to perform a load corresponding operation.

Referring to FIG. 1 again, the compressor control apparatus may further include a power voltage detection unit 40 configured to detect the power voltage of the commercial alternating current (AC) power 10. Furthermore, the compressor control apparatus may further include a zero voltage detection unit (not shown) configured to detect the zero voltage of the power voltage, and a power frequency detection unit (not shown) configured to detect the power frequency of the commercial alternating current (AC) power.

Furthermore, the compressor control apparatus may further include a direct current (DC) power supply unit 50 configured to convert the commercial alternating current power 10 into direct current power to apply it to the first and the second alternating current switch. The direct current (DC) power supply unit 50 is a switching mode power supply (SMPS) for receiving commercial alternating current power and performing AC-DC conversion, and supplies drive voltages (for example, 5, 15 V) for the elements of the control unit 30, the first and the second alternating current switch, and the like. In other words, direct current voltages required for the two alternating current switches and two compressors are supplied using one SMPS.

Here, at least one of the first and the second compressor (C1, C2) may be a reciprocating compressor, particularly, a linear compressor. Furthermore, the two compressors may be configured to have different capacities. The first and the second compressor may be operated in a simultaneous manner or operated in a separate manner, respectively, by a compressor control apparatus using two alternating current switches. It may be merely defined as a compressor operation mode. The compressor operation mode is an operation mode determined by a load or required freezing capacity of the first and the second compressor. The compressor operation mode may be an operation mode for controlling the stroke, frequency or the like of each compressor by dividing it into a predetermined value. Here, the compressor operation mode may be merely divided into a separate operation mode of the first compressor, a separate operation mode of the second compressor, and a simultaneous operation mode of the first and the second compressor.

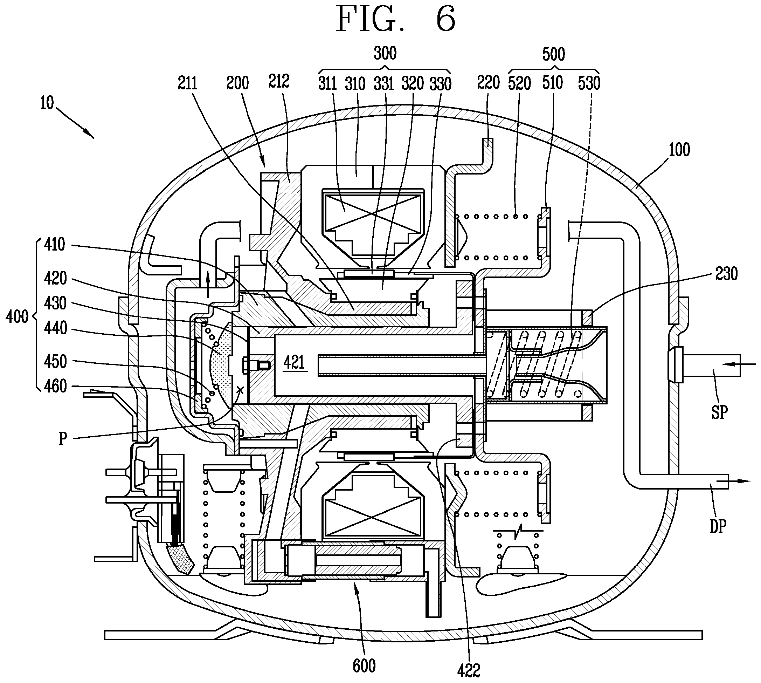

Referring to FIG. 6, the first and the second compressor may include a casing 100 communicated with a gas suction pipe (SP) and a gas discharge pipe (DP), a frame unit 200 elastically supported by an inner portion of the casing 100, a motor 300 supported by the frame unit 200 to allow a mover 330 to perform a linear reciprocating movement, a compression unit 400 in which a piston 420 is coupled to the mover 330 of the motor 300 and supported by the frame unit 200, a plurality of resonant units 500 for elastically supporting the mover 330 of the motor 300 and the piston 420 of the compression unit 400 in the movement direction to induce a resonant movement.

The frame unit 200 may include a first frame 210 by which the compression unit 400 is supported and which supports a front side of the motor 300, a second frame 220 coupled to the first frame 210 to support a rear side of the motor 300, and a third frame 230 coupled to the second frame 220 to support a plurality of resonant springs 530. The first frame 210, second frame 220, and third frame 230 may be all formed of a non-magnetic body, such as aluminium, to reduce core loss.

Furthermore, the first frame 210 is formed with a frame portion 211 having a ring plate shape, a cylinder portion 212 having a cylindrical shape into which a cylinder 410 is inserted is formed on a rear surface, namely, lengthwise as an integral body in the motor direction, at the center of the frame portion 211. The frame portion 211 is preferably formed such that the outer diameter of the frame portion 211 is at least not less than the inner diameter of the outer stator 310 of the motor 300 to support both an outer stator 310 and an inner stator 320.

Furthermore, the first frame 210 is fixed such that the inner stator 320 is inserted into an outer circumferential surface of the cylinder portion 212. In this case, the first frame 210 is preferably formed of a non-magnetic body, such as aluminium, to reduce magnetic loss. Furthermore, the cylinder portion 212 may be formed on the cylinder 410 as an integral body using an insert die casting method. However, the cylinder portion 212 may be screw-assembled such that the cylinder 410 is pressurized or a screw thread is formed at an inner circumferential surface thereof. Furthermore, it may be preferable in the stability aspect of the cylinder 410 that a step surface or inclined surface is formed between a front side inner circumferential surface and a rear side inner circumferential surface of the cylinder portion 212, thereby allowing the cylinder 410 coupled to an inner circumferential surface of the cylinder portion 212 to be supported in the piston direction.

The motor 300 may include an outer stator 310 supported between the first frame 210 and second frame 220 and around which a coil 311 is wound, an inner stator 320 coupled to an inner side of the outer stator 310 with a predetermined interval and inserted into the cylinder portion 212, and a mover 330 in which a magnet 331 is provided to correspond to the coil 311 of the outer stator 310 to perform a linear reciprocating movement along the magnetic flux direction between the outer stator 310 and inner stator 320. The outer stator 310 and inner stator 320 are formed by laminating a plurality of thin stator core sheets in a cylindrical shape for each sheet or laminating a plurality of thin stator core sheets in a block shape and laminating the stator block in a radial shape.

The compression unit 400 may include a cylinder 410 formed on the first frame 210 as an integral body, a piston 420 coupled to the mover 330 of the motor 300 to perform a reciprocating movement in the compression space (P) of the cylinder 410, a suction valve 430 mounted at a front end of the piston 420 to control the suction of the refrigerant gas while opening or closing the suction passage 421 of the piston 420, a discharge valve 440 mounted at a discharge side of the cylinder 410 to control the suction of the compression gas while opening or closing the compression space (P) of the cylinder 410, a valve spring 450 elastically supporting the discharge valve 440, and a discharge cover 460 fixed to the first frame 210 at a discharge side of the cylinder 410 to accommodate the discharge valve 440 and valve spring 450.

The cylinder 410 is formed in a cylindrical shape and inserted and coupled to the cylinder portion 212 of the first frame 210.

The cylinder 410 may be formed of a material having a hardness higher than that of cast iron or at least that of the first frame 210, more accurately, that of the cylinder portion 212 by considering abrasion due to the piston 420 as forming a bearing surface with the piston 420 an inner circumferential surface of which is made of cast iron.

The piston 420 may be preferably formed of the same material as the cylinder 410 or formed of a material having a hardness similar to that of the cylinder 410 to reduce abrasion with the cylinder 410. Furthermore, the suction passage 421 is formed in a penetrated manner within the piston 420 such that refrigerant is inhaled into the compression chamber (P) of the cylinder 410.

The resonant unit 500 may include a spring supporter 510 coupled to a connecting portion between the mover 330 and the piston 420, first resonant springs 520 supported at a front side of the spring supporter 510, and second resonant springs 530 supported at a rear side of the spring supporter 510.

In the drawing, non-described reference numeral 422 denotes a piston connecting portion and non-described reference numeral 600 denotes an oil feeder.

When power is applied to the motor 300 and a magnetic flux is formed between the outer stator 310 and inner stator 320, the mover 330 placed at a gap between the outer stator 310 and inner stator 320 continuously performs a reciprocating movement by the resonant unit 500 while moving along the direction of the magnetic flux. Furthermore, when the piston 420 performs a backward movement within the cylinder 410, refrigerant filled in an inner space of the casing 100 passes through the suction passage 421 of the piston 420 and the suction valve 430 and inhaled into the compression space (P) of the cylinder 410. When the piston 420 performs a forward movement within the cylinder 410, refrigerant gas inhaled into the compression space (P) is compressed to repeat a series of processes of discharging while opening the discharge valve 440.

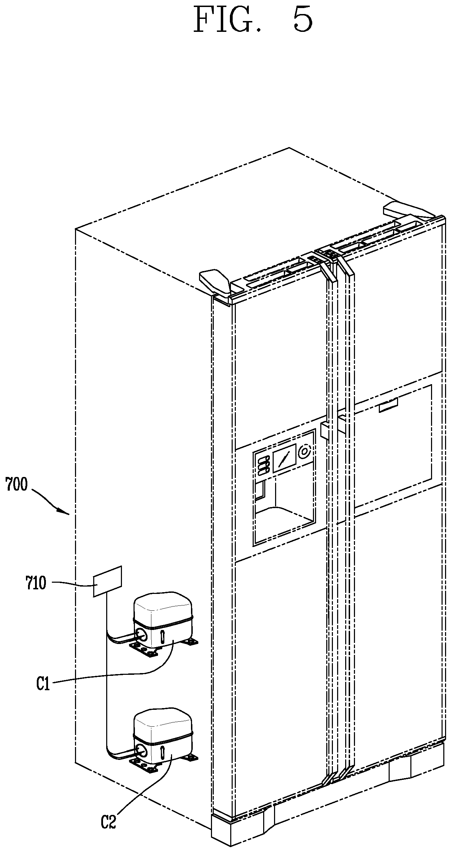

The reciprocating compressor may be widely used for a freezing device such as a refrigerator or air conditioner. When the first and the second compressor are applied to a refrigerator as illustrated in FIG. 5, it may be designed such that each compressor takes charge of the refrigerating chamber and freezing chamber, respectively.

Referring to FIGS. 1 and 5, a refrigerator according to an embodiment may include a refrigerator body, a first and a second compressor provided in the refrigerator body to compress refrigerant, respectively, a first and a second alternating current switch switched based on a first and a second control signal to drive the first and the second compressor, and a control unit configured to generate the first and the second control signal based on a load of the first and the second compressor and output them to the first and the second alternating current switch, wherein the first and the second compressor are operated in a simultaneous manner or the first compressor or the second compressor is operated in a separate manner.

Referring to FIG. 5, the refrigerator 700 is provided with a main board 710 therein for controlling the entire operation of the refrigerator, and connected to the first and the second compressor (C1, C2). The compressor control apparatus may be provided in the main board 710. The refrigerator 700 is operated by driving the first and the second compressor. Cool air supplied to an inner portion of the refrigerator is generated by the operation of heat exchange with refrigerant, and continuously supplied to an inner portion of the refrigerator while repeatedly performing compression-condensation-expansion-evaporation cycles. The supplied refrigerant is uniformly transferred to an inner portion of the refrigerator by convection, thereby allowing foods within the refrigerator to be stored at a desired temperature.

The compressor control apparatus may further include a first and a second load detection unit configured to detect a load of the first and the second compressor. Here, the control unit 30 generates a first and a second control signal based on the load of the first and the second compressor (C1, C2) to operate the first and the second compressor in a separate or simultaneous manner. The control unit 30 generates the first and the second control signal using a first and a second stroke of the first and the second compressor (C1, C2), and stroke instruction values for the first and the second compressor. Here, the load of the compressor may include a motor current, a motor voltage, a stroke, their phase difference, a frequency, and the like. For example, when a compressor is provided in a refrigerator, the load of the compressor may be detected using a load of the refrigerator.

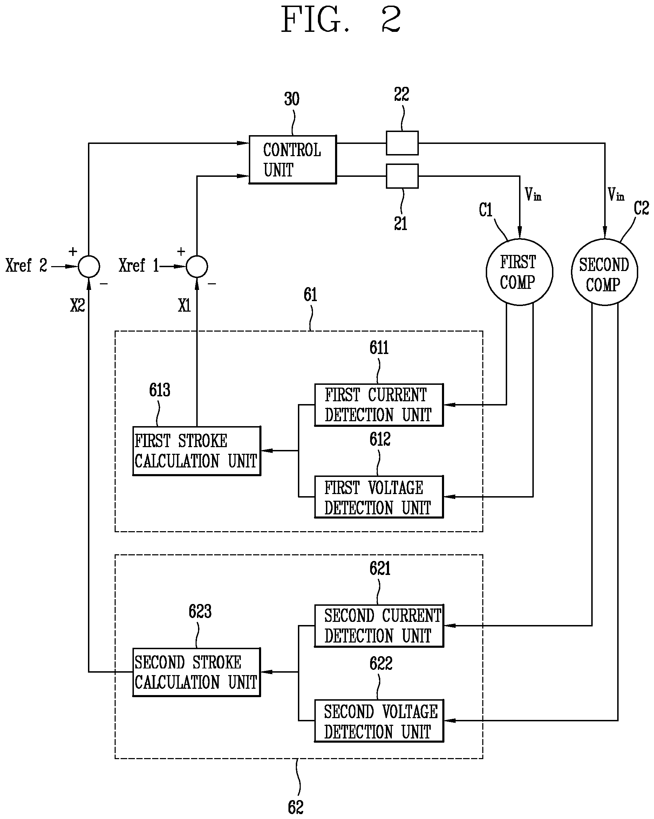

Referring to FIG. 2, the compressor control apparatus may further include a first current detection unit 611 configured to detect a first motor drive current applied to a first motor provided in the first compressor (C1) and a first voltage detection unit 612 configured to detect a first motor drive voltage applied to the first motor. Furthermore, the compressor control apparatus may further include a second current detection unit 621 configured to detect a second motor drive current applied to a second motor provided in the second compressor (C2) and a second voltage detection unit 622 configured to detect a second motor drive voltage applied to the second motor.

The first and the second current detection unit 611, 621 detect a drive current applied to the compressor based on a load of the compressor or a load of the freezer. The current detection units detect a motor current applied to the compressor motor. The first and the second voltage detection unit 612, 622 detect a motor voltage applied to the compressor. The voltage detection units detect a motor voltage applied between both ends of the compressor motor based on a load of the compressor.

The compressor control apparatus according to the embodiments may further include a first and a second stroke calculation unit 613, 623 configured to calculate a first and second stroke of the first and the second compressor, respectively, using the motor drive current and the motor drive voltage. The relationship among the motor voltage, motor current, and stroke is as follows. The first and the second stroke calculation unit 613, 623 may calculate a stroke using the following equation based on a motor voltage detected through the first and the second voltage detection unit 612, 622, and a motor current detected through the first and the second current detection unit 611, 621.

[Equation 1]

$$x = \frac{1}{\alpha} \int \left( Vm - Ri - L\frac{di}{dt} \right) dt$$

Here, x is a stroke, $\alpha$ is a motor constant, Vm is a motor voltage, R is a resistance, L is an inductance, and i is a motor current.

The control unit 30 receives a first stroke instruction value (xref1) and compares a first stroke estimate value (x1) calculated by the first stroke calculation unit 613 with the first stroke instruction value. The control unit compares the first stroke estimate value with the first stroke instruction value, and generates a first control signal for switching the first alternating current switch based on the comparison result. In addition, the control unit receives a second stroke instruction value (xref2) and compares a second stroke estimate value (x2) calculated by the second stroke calculation unit 623 with the second stroke instruction value. The control unit compares the second stroke estimate value with the second stroke instruction value, and generates a second control signal for controlling the second alternating current switch based on the comparison result. The compressor control apparatus typically performs sensorless control, and the detailed description thereof will be omitted.

The first and the second load detection unit 61, 62 may detect a load on the first compressor (C1) and the second compressor (C2), respectively, using the motor drive current, the motor drive voltage, or the first and the second stroke. The control unit 50 independently operates the first compressor and the second compressor based on the load on the first compressor and the second compressor detected through the first load detection unit and the second load detection unit.

The size of the compressor load may be detected using a phase difference between the motor current and stroke estimate value, and a phase difference between the motor voltage and stroke estimate value. Furthermore, the size of the compressor load may be detected using a gas spring constant (Kg). In addition, the size of the compressor load may be detected using a gas damping constant (Cg).

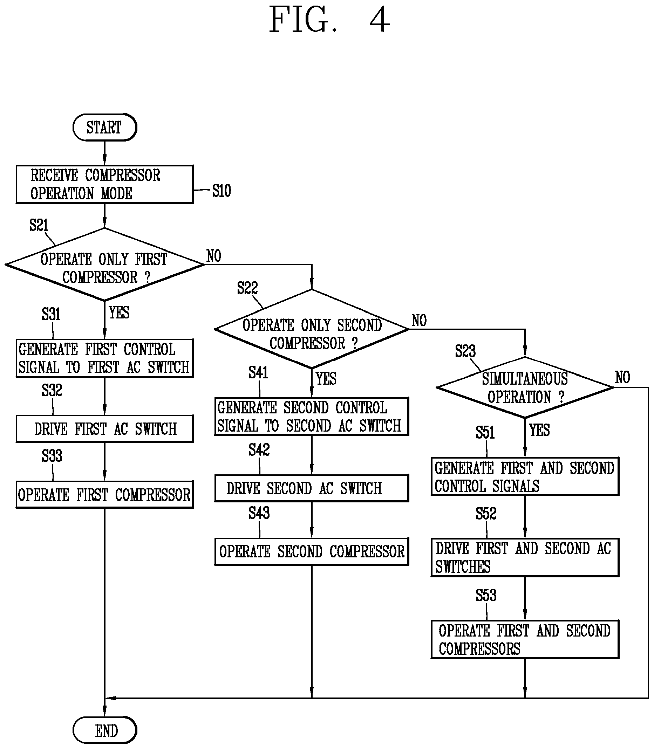

Referring to FIG. 4, a compressor control method according to an embodiment controls the first compressor and the second compressor using a first and a second alternating current (AC) switch, respectively. The compressor control method may include receiving a compressor operation mode (S10), and driving the first and the second alternating current switch in a simultaneous manner or driving the first alternating current switch or the second alternating current switch in a separate manner based on the compressor operation mode (S21 and below). Here, the compressor operation mode is a mode determined by a load or required freezing capacity of the first and the second compressor. The compressor operation mode may control a compression amount or the like of each compressor, but merely divided into a mode of operating only the first compressor, a mode of operating only the second compressor, and a mode of operating the first and the second compressor in a simultaneous manner. Hereinafter, the configuration of the apparatus refers to FIGS. 1 and 2.

The driving step operates the first and the second compressor connected to the driven alternating current switch in a simultaneous manner or operates the first compressor or the second compressor in a separate manner (S33, S43, S53). Here, the operating step varies a firing angle of the first alternating current switch or second alternating current switch based on a freezing capacity of the first compressor or the second compressor.

The first and the second alternating current switch are connected to the first and the second compressor, and then the compressor control apparatus receives a compressor operation mode (S10), and determines whether to operate only the first compressor, operate only the second compressor, or operate the first and the second compressor in a simultaneous manner (S21, S22, S23).

Referring to FIG. 2, when operating the first compressor, the compressor control apparatus compares a first stroke instruction value (xref1) with a first stroke estimate value (x1), and generates a first control signal for switching the first alternating current switch based on the comparison result (S31). In addition, when operating the second compressor, the compressor control apparatus compares a second stroke instruction value (xref2) with a second stroke estimate value, and generates a second control signal for switching the second alternating current switch based on the comparison result (S41). When the first and the second compressor are operated in a simultaneous manner, the compressor control apparatus generates the first and the second control signal to the first and the second alternating current switch, respectively (S51).

The compressor control apparatus varies a firing angle of the first alternating current switch or second alternating current switch based on a freezing capacity of the first and the second compressor, and performs voltage control for the compressor based on this. Referring to FIG. 3A, when a gate voltage is received at the first alternating current switch based on a first control signal, the first alternating current switch supplies a first motor drive current to the first compressor). Similarly, referring to FIG. 3B, when a gate voltage is received at the second alternating current switch based on a second control signal, the second alternating current switch supplies a second motor drive current to the second compressor (C2).

As described above, in a compressor control apparatus according to the embodiments of the present invention and a refrigerator including the same, the operation of two compressors are controlled using an alternating current (AC) switch, thereby minimizing the use of elements as well as increasing the compressor capacity and enhancing the operation efficiency of a system.

According to the embodiments of the present invention, a plurality of operation modes may be used to correspond to a load or freezing capacity using two compressors. Furthermore, according to the present invention, two compressors are operated in a separate or simultaneous manner using two alternating current (AC) switches, thereby simplifying the configuration of a system to reduce the cost.

**Claims**

1. A compressor control apparatus for controlling the operation of two compressors, comprising:

a first and a second alternating current (AC) switch (21, 22) configured to switch AC power applied to a first and a second compressor (C1, C2) based on a first and a second control signal;
a first and a second current detection unit (611, 621) configured to detect a first and a second motor drive current applied to a first and a second motor provided in the first compressor and the second compressor (C1, C2), respectively;
a first and a second voltage detection unit (612, 622) configured to detect a first and a second motor drive voltage applied to the first and the second motor;
a first and a second stroke calculation unit (613, 623) configured to calculate a first and second stroke of the first compressor and the second compressor, respectively; and
a control unit (30) configured to generate the first and the second control signal based on a firing angle varying according to a load of the first and the second compressor (C1, C2) and to output them to the first and the second alternating current switch (21, 22), thereby an operation rate of the first or the second compressor (C1, C2) is controlled,
wherein the compressor control apparatus is configured to operate the first and the second compressor (C1, C2) in a simultaneous manner or the first compressor (C1) or the second compressor (C2) in a separate manner, and
wherein the load of the first and second compressors is detected using a phase difference between the detected motor drive current and an estimated stroke value, and a phase difference between the detected motor drive voltage and the estimated stroke value.

2. The compressor control apparatus of claim 1, wherein the control unit (30) is adapted to vary the firing angle of the first alternating current switch (21) and/or second alternating current switch (22) based on a freezing capacity of the first compressor or second compressor (C1, C2).

3. The compressor control apparatus of claim 1 or 2, further comprising:
an input voltage detection unit (40) configured to detect the power voltage of commercial alternating current (AC) power.

4. The compressor control apparatus as claimed in any one of the preceding claims, further comprising:
a direct current (DC) power supply unit (50) configured to convert the commercial alternating current power into direct current power to apply it to the first and/or the second alternating current switch (21, 22).

5. The compressor control apparatus as claimed in any one of the preceding claims, wherein the first and the second stroke calculation unit (613, 623) are adapted to use the first and the second motor drive current and the first and the second motor drive voltage for calculating a first and second stroke of the first compressor and the second compressor, respectively.

6. The compressor control apparatus as claimed in any one of the preceding claims, wherein the first compressor or the second compressor (C1, C2) is a reciprocating compressor.

7. A compressor control method for controlling a first compressor and a second compressor (C1, C2) using a first and a second alternating current (AC) switch (21,22), respectively, the method comprising:

   receiving (S10) a compressor operation mode; and
   driving (S32, S42, S52) the first and the second alternating current switch (21,22) in a simultaneous manner or driving the first alternating current switch or the second alternating current switch (21,22) in a separate manner based on the compressor operation mode,
   wherein the first and the second alternating current (AC) switch (21, 22) is configured to switch AC power applied to the first and the second compressor (C1, C2) based on a first and a second control signal,
   wherein the first and the second control signal are generated based on a firing angle varying according to a load the first and the second compressor (C1, C2) by a control unit (30), thereby an operation rate of the first or the second compressor (C1, C2) is controlled, and
   wherein the load of the first and second compressors is detected using a phase difference between a detected motor drive current and an estimated stroke value, and a phase difference between a detected motor drive voltage and the estimated stroke value.

8. The method of claim 7, wherein said driving step operates the first and the second compressor (C1, C2) connected to the driven alternating current switch (21,22) in a simultaneous manner or operates the first compressor or the second compressor (C1, C2) in a separate manner.

9. The method of claim 8, wherein said operating step varies a firing angle of the first alternating current switch or second alternating current switch (21,22) based on a freezing capacity of the first compressor or the second compressor (C1, C2).

10. The method as claimed in any one of the preceding claims 7-9, wherein the compressor operation mode is an operation mode determined by a load or required freezing capacity of the first and the second compressor (C1, C2), and comprises at least one of a mode of operating only the first compressor (C1), a mode of operating only the second compressor (C2), and a mode of operating the first and the second compressor (C1, C2) in a simultaneous manner.

11. A refrigerator (700), comprising:

   a refrigerator body;
   a first and a second compressor (C1, C2) provided in the refrigerator body to compress refrigerant, respectively;
   and a compressor control apparatus according to claim 1.

12. The refrigerator of claim 11, wherein the control unit (30) of the compressor control apparatus is adapted to vary the firing angle of the first alternating current switch (21) or second alternating current switch (22) based on a freezing capacity of the first compressor or the second compressor (C1, C2).

13. The refrigerator of claim 11 or 12, wherein the compressor control apparatus further comprises:
   an input voltage detection unit (40) configured to detect the power voltage of commercial alternating current (AC) power.

**Patentansprüche**

1. Kompressorsteuervorrichtung zum Steuern des Betriebs von zwei Kompressoren, die Folgendes umfasst:

   einen ersten und einen zweiten Wechselstromschalter (AC-Schalter) (21, 22), die konfiguriert sind, auf der Grundlage eines ersten und eines zweiten Steuersignals Wechselstromleistung, die in einen ersten und einen zweiten Kompressor (C1, C2) eingegeben wird, zu schalten;
   eine erste und eine zweite Stromdetektionseinheit (611, 621), die konfiguriert sind, einen ersten und einen zweiten Motoransteuerstrom zu detektieren, die in einen ersten und einen zweiten Motor eingegeben werden, die im ersten Kompressor bzw. im zweiten Kompressor (C1, C2) vorgesehen sind;
   eine erste und eine zweite Spannungsdetektionseinheit (612, 622), die konfiguriert sind, eine erste und eine zweite Motoransteuerspannung zu detektieren, die an den ersten und den zweiten Motor angelegt werden;
   eine erste und eine zweite Hubberechnungseinheit (613, 623), die konfiguriert sind, einen ersten und einen zweiten Hub des ersten Kompressors bzw. des zweiten Kompressors zu berechnen; und

eine Steuereinheit (30), die konfiguriert ist, auf der Grundlage eines Zündwinkels, der sich gemäß einer Last des ersten und des zweiten Kompressors (C1, C2) verändert, das erste und das zweite Steuersignal zu erzeugen und diese an den ersten und den zweiten Wechselstromschalter (21, 22) auszugeben, wodurch eine Betriebsrate des ersten oder des zweiten Kompressors (C1, C2) gesteuert wird,

wobei die Kompressorsteuervorrichtung konfiguriert ist, den ersten und den zweiten Kompressor (C1, C2) gleichzeitig zu betreiben oder den ersten Kompressor (C1) oder den zweiten Kompressor (C2) getrennt zu betreiben, und

wobei die Last des ersten und des zweiten Kompressors unter Verwendung einer Phasendifferenz zwischen dem detektierten Motoransteuerstrom und dem geschätzten Hubwert und einer Phasendifferenz zwischen der detektierten Motoransteuerspannung und dem geschätzten Hubwert detektiert wird.

2. Kompressorsteuervorrichtung nach Anspruch 1, wobei die Steuereinheit (30) ausgelegt ist, den Zündwinkel des ersten Wechselstromschalters (21) und/oder des zweiten Wechselstromschalters (22) auf der Grundlage einer Gefrierkapazität des ersten Kompressors oder des zweiten Kompressors (C1, C2) zu verändern.

3. Kompressorsteuervorrichtung nach Anspruch 1 oder 2, die ferner Folgendes umfasst:
eine Eingangsspannungsdetektionseinheit (40), die konfiguriert ist, die Voltstärke einer Netzwechselstromleistung (AC) zu detektieren.

4. Kompressorsteuervorrichtung nach einem der vorhergehenden Ansprüche, die ferner Folgendes umfasst:
eine Gleichstromleistungszuführeinheit (DC-Leistungszuführeinheit) (50), die konfiguriert ist, die Netzwechselstromleistung in Gleichstromleistung umzusetzen, um diese in den ersten und/oder den zweiten Wechselstromschalter (21, 22) einzugeben.

5. Kompressorsteuervorrichtung nach einem der vorhergehenden Ansprüche, wobei die erste und die zweite Hubberechnungseinheit (613, 623) ausgelegt sind, den ersten und den zweiten Motoransteuerstrom und die erste und die zweite Motoransteuerspannung zum Berechnen eines ersten und eines zweiten Hubs des ersten Kompressors und des zweiten Hubs des ersten Kompressors bzw. des zweiten Kompressors zu verwenden.

6. Kompressorsteuervorrichtung nach einem der vorhergehenden Ansprüche, wobei der erste Kompressor oder der zweite Kompressor (C1, C2) ein Kolbenkompressor ist.

7. Kompressorsteuerverfahren zum Steuern eines ersten Kompressors und eines zweiten Kompressors (C1, C2) unter Verwendung eines ersten bzw. eines zweiten Wechselstromschalters (AC-Schalters) (21, 22), wobei das Verfahren Folgendes umfasst:

Empfangen (S10) einer Kompressorbetriebsart; und

Ansteuern (S32, S42, S52) des ersten und des zweiten Wechselstromschalters (21, 22) auf gleichzeitige Weise oder Ansteuern des ersten Wechselstromschalters oder des zweiten Wechselstromschalters (21, 22) auf getrennte Weise auf der Grundlage der Kompressorbetriebsart,

wobei der erste und der zweite Wechselstromschalter (AC-Schalter) (21, 22) konfiguriert sind, auf der Grundlage eines ersten und eines zweiten Steuersignals eine Wechselstromleistung, die in den ersten und den zweiten Kompressor (C1, C2) eingegeben wird, zu schalten,

wobei das erste und das zweite Steuersignal auf der Grundlage eines Zündwinkels erzeugt werden, der sich durch eine Steuereinheit (30) gemäß einer Last des ersten und des zweiten Kompressors (C1, C2) verändert, wodurch eine Betriebsrate des ersten oder des zweiten Kompressors (C1, C2) gesteuert wird, und

wobei die Last des ersten und des zweiten Kompressors unter Verwendung einer Phasendifferenz zwischen einem detektierten Motoransteuerstrom und einem geschätzten Hubwert und einer Phasendifferenz zwischen einer detektierten Motoransteuerspannung und dem geschätzten Hubwert detektiert wird.

8. Verfahren nach Anspruch 7, wobei der Ansteuerschritt den ersten und den zweiten Kompressor (C1, C2), die mit dem angesteuerten Wechselstromschalter (21, 22) verbunden sind, gleichzeitig betreibt oder den ersten Kompressor oder den zweiten Kompressor (C1, C2) getrennt betreibt.

9. Verfahren nach Anspruch 8, wobei der Schritt des Betreibens einen Zündwinkel des ersten Wechselstromschalters oder des zweiten Wechselstromschalters (21, 22) auf der Grundlage einer Gefrierkapazität des ersten Kompressors oder des zweiten Kompressors (C1, C2) verändert.

10. Verfahren nach einem der vorhergehenden Ansprüche 7-9, wobei die Kompressorbetriebsart eine Betriebsart ist, die durch eine Last oder eine erforderliche Gefrierkapazität des ersten und des zweiten Kompressors (C1, C2) bestimmt wird und eine Betriebsart des Betreibens lediglich des ersten Kompressors (C1) und/oder eine Betriebsart des Betreibens lediglich des zweiten Kompressors (C2) und/oder eine Betriebsart des Betreibens des ersten und des zweiten Kompressors (C1, C2) auf gleichzeitige Weise umfasst.

11. Kühlschrank (700), der Folgendes umfasst:

einen Kühlschrankkörper;
einen ersten und einen zweiten Kompressor (C1, C2), die im Kühlschrankkörper vorgesehen sind, um jeweils ein Kühlmittel zu komprimieren; und
eine Kompressorsteuervorrichtung nach Anspruch 1.

12. Kühlschrank nach Anspruch 11, wobei die Steuereinheit (30) der Kompressorsteuervorrichtung ausgelegt ist, auf der Grundlage einer Gefrierkapazität des ersten Kompressors oder des zweiten Kompressors (C1, C2) den Zündwinkel des ersten Wechselstromschalters (21) oder des zweiten Wechselstromschalters (22) zu verändern.

13. Kühlschrank nach Anspruch 11 oder 12, wobei die Kompressorsteuervorrichtung ferner Folgendes umfasst:
eine Eingangsspannungsdetektionseinheit (40), die konfiguriert ist, die Voltstärke einer kommerziellen Wechselstromleistung (AC) zu detektieren.

**Revendications**

1. Appareil de commande de compresseurs pour commander le fonctionnement de deux compresseurs, comportant :

un premier et un second commutateur de courant alternatif (AC) (21, 22) configurés pour commuter une alimentation en courant alternatif appliquée à un premier et un second compresseur (C1, C2) sur la base d'un premier et d'un second signal de commande ;
une première et une seconde unité de détection de courant (611, 621) configurées pour détecter un premier et un second courant d'entraînement de moteur appliqués à un premier et un second moteur agencés dans le premier compresseur et le second compresseur (C1, C2), respectivement ;
une première et une seconde unité de détection de tension (612, 622) configurées pour détecter une première et une seconde tension d'entraînement de moteur appliquées au premier et au second moteur ;
une première et une seconde unité de calcul de course (613, 623) configurées pour calculer une première et une seconde course du premier compresseur et du second compresseur, respectivement ; et
une unité de commande (30) configurée pour générer le premier et le second signal de commande sur la base d'un angle d'amorçage variant en fonction d'une charge du premier et du second compresseur (C1, C2) et pour les transmettre au premier et au second commutateur de courant alternatif (21, 22), en commandant ainsi une vitesse de fonctionnement du premier ou du second compresseur (C1, C2),
dans lequel l'appareil de commande de compresseurs est configuré pour faire fonctionner le premier et le second compresseur (C1, C2) d'une manière simultanée, ou le premier compresseur (C1) ou le second compresseur (C2) d'une manière séparée, et
dans lequel la charge des premier et second compresseurs est détectée en utilisant une différence de phase entre le courant d'entraînement de moteur détecté et une valeur de course estimée, et une différence de phase entre la tension d'entraînement de moteur détectée et la valeur de course estimée.

2. Appareil de commande de compresseurs selon la revendication 1, dans lequel l'unité de commande (30) est adaptée pour faire varier l'angle d'amorçage du premier commutateur de courant alternatif (21) et/ou du second commutateur de courant alternatif (22) sur la base d'une capacité de congélation du premier compresseur ou du second compresseur (C1, C2).

3. Appareil de commande de compresseurs selon la revendication 1 ou 2, comportant en outre :
une unité de détection de tension d'entrée (40) configurée pour détecter la tension d'alimentation d'une alimentation en courant attentif (CA) du réseau extérieur.

4. Appareil de commande de compresseurs selon l'une quelconque des revendications précédentes, comportant en outre :
une unité d'alimentation en courant continu (DC) (50) configurée pour convertir l'alimentation en courant alternatif du réseau extérieur, en alimentation en courant continu pour l'appliquer au premier et/ou au second commutateur de courant alternatif (21, 22).

5. Appareil de commande de compresseurs selon l'une quelconque des revendications précédentes, dans lequel la première et la seconde unité de calcul de course (613, 623) sont adaptées pour utiliser le premier et le second courant d'entraînement de moteur et la première et la seconde tension d'entraînement de moteur pour calculer une première et une seconde course du premier compresseur et du second compresseur, respectivement.

**6.** Appareil de commande de compresseurs selon l'une quelconque des revendications précédentes, dans lequel le premier compresseur ou le second compresseur (C1, C2) est un compresseur alternatif.

**7.** Procédé de commande de compresseurs pour commander un premier compresseur et un second compresseur (C1, C2) en utilisant un premier et un second commutateur de courant alternatif (AC) (21, 22), respectivement, le procédé comportant les étapes consistant à :

recevoir (S10) un mode de fonctionnement de compresseurs ; et
piloter (S32, S42, S52) le premier et le second commutateur de courant alternatif (21, 22) d'une manière simultanée ou piloter le premier commutateur de courant alternatif ou le second commutateur de courant alternatif (21, 22) d'une manière séparée sur la base du mode de fonctionnement de compresseurs,
dans lequel le premier et le second commutateur de courant alternatif (AC) (21, 22) est configuré pour commuter l'alimentation AC appliquée au premier et au second compresseur (C1, C2) sur la base d'un premier et d'un second signal de commande,
dans lequel le premier et le second signal de commande sont générés sur la base d'un angle d'amorçage variant en fonction d'une charge du premier et du second compresseur (C1, C2) par une unité de commande (30), en commandant ainsi une vitesse de fonctionnement du premier ou du second compresseur (C1, C2), et
dans lequel la charge des premier et second compresseurs est détectée en utilisant une différence de phase entre un courant d'entraînement de moteur détecté et une valeur de course estimée, et une différence de phase entre une tension d'entraînement de moteur détectée et la valeur de course estimée.

**8.** Procédé selon la revendication 7, dans lequel ladite étape de pilotage fait fonctionner le premier et le second compresseur (C1, C2) reliés au commutateur de courant alternatif piloté (21, 22) d'une manière simultanée, ou fait fonctionner le premier compresseur ou le second compresseur (C1, C2) d'une manière séparée.

**9.** Procédé selon la revendication 8, dans lequel ladite étape de fonctionnement fait varier l'angle d'amorçage du premier commutateur de courant alternatif ou du second commutateur de courant alternatif (21, 22) sur la base d'une capacité de congélation du premier compresseur ou du second compresseur (C1, C2).

**10.** Procédé selon l'une quelconque des revendications 7 à 9 précédentes, dans lequel le mode de fonctionnement de compresseurs est un mode de fonctionnement déterminé par une charge ou une capacité de congélation requise du premier et du second compresseur (C1, C2), et comporte au moins un mode parmi un mode consistant à faire fonctionner uniquement le premier compresseur (C1), un mode consistant à faire fonctionner uniquement le second compresseur (C2), et un mode consistant à faire fonctionner le premier et le second compresseur (C1, C2) d'une manière simultanée.

**11.** Réfrigérateur (700), comportant :

un corps de réfrigérateur ;
un premier et un second compresseur (C1, C2) agencés dans le corps de réfrigérateur pour comprimer du fluide frigorigène, respectivement ;
et un appareil de commande de compresseurs selon la revendication 1.

**12.** Réfrigérateur selon la revendication 11, dans lequel l'unité de commande (30) de l'appareil de commande de compresseurs est adaptée pour faire varier l'angle d'amorçage du premier commutateur de courant alternatif (21) ou du second commutateur de courant alternatif (22) sur la base d'une capacité de congélation du premier compresseur ou du second compresseur (C1, C2).

**13.** Réfrigérateur selon la revendication 11 ou 12, dans lequel l'appareil de commande de compresseurs comporte en outre :
une unité de détection de tension d'entrée (40) configurée pour détecter la tension d'alimentation d'une alimentation en courant attentif (CA) du réseau extérieur.

# FIG. 1

# FIG. 2

# FIG. 3A

FIRST CONTROL
SIGNAL

FIRST MOTOR
DRIVE CURRENT

# FIG. 3B

SECOND CONTROL
SIGNAL

SECOND MOTOR
DRIVE CURRENT

# FIG. 4

START

RECEIVE COMPRESSOR
OPERATION MODE — S10

S21

OPERATE ONLY FIRST
COMPRESSOR ? — NO

S22

YES — S31

GENERATE FIRST CONTROL
SIGNAL TO FIRST AC SWITCH

S32

DRIVE FIRST AC SWITCH

S33

OPERATE FIRST COMPRESSOR

OPERATE ONLY SECOND
COMPRESSOR ? — NO

S23

YES — S41

GENERATE SECOND CONTROL
SIGNAL TO SECOND AC SWITCH

S42

DRIVE SECOND AC SWITCH

S43

OPERATE SECOND COMPRESSOR

SIMULTANEOUS
OPERATION ? — NO

S51

YES

GENERATE FIRST AND SECOND
CONTROL SIGNALS

S52

DRIVE FIRST AND SECOND AC
SWITCHES

S53

OPERATE FIRST AND SECOND
COMPRESSORS

END

# FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070283707 A1
- JP 2000130824 A